(19) Europäisches Patentamt
European Patent Office
Office européen des brevets

(11) EP 4 528 677 A1

(12) EUROPEAN PATENT APPLICATION
published in accordance with Art. 153(4) EPC

(43) Date of publication:
26.03.2025 Bulletin 2025/13

(51) International Patent Classification (IPC):
G06V 20/56 (2022.01)    G06V 10/80 (2022.01)
G06V 10/82 (2022.01)    G06N 3/04 (2023.01)

(21) Application number: 23838704.7

(22) Date of filing: 29.06.2023

(86) International application number:
PCT/CN2023/103659

(87) International publication number:
WO 2024/012211 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.07.2022 CN 202210834143

(71) Applicant: Anhui NIO Autonomous Driving
Technology Co., Ltd.
Hefei, Anhui 230601 (CN)

(72) Inventors:
• PENG, Chao
  Shanghai 201804 (CN)
• XIONG, Qi
  Shanghai 201804 (CN)
• DENG, Haoping
  Shanghai 201804 (CN)
• LIANG, Ji
  Shanghai 201804 (CN)
• SUN, Lei
  Shanghai 201804 (CN)
• REN, Shaoqing
  Shanghai 201804 (CN)

(74) Representative: Vossius & Partner
Patentanwälte Rechtsanwälte mbB
Siebertstrasse 3
81675 München (DE)

(54) **AUTONOMOUS-DRIVING ENVIRONMENTAL PERCEPTION METHOD, MEDIUM AND VEHICLE**

(57) The invention relates to the field of autonomous driving technologies, and specifically provides an environmental perception method for autonomous driving, a medium, and a vehicle, aiming to solve the technical problem in the prior art that in the event of damage to any one of sensors, such as a vehicle-mounted camera or a LiDAR, environmental perception information cannot be obtained. The environmental perception method for autonomous driving according to the invention includes: obtaining first target detection information based on image data from a camera; obtaining second target detection information based on point cloud data from a LiDAR; obtaining relative positioning information and global positioning information based on positioning data from a positioning sensor; fusing the first target detection information, the second target detection information, and the relative positioning information, to obtain first environmental perception information; and fusing the first environmental perception information, the relative positioning information, and the global positioning information, to obtain second environmental perception information. In this way, the accuracy of the environmental perception information is improved.

*FIG. 1*

EP 4 528 677 A1

**Description**

The invention claims the priority to Chinese Patent Application No. CN 202210834143.7, filed on July 14, 2022, and entitled "ENVIRONMENTAL PERCEPTION METHOD FOR AUTONOMOUS DRIVING, MEDIUM, AND VEHICLE", which is incorporated herein by reference in its entirety.

**TECHNICAL FIELD**

The invention relates to the field of autonomous driving technologies, and in particular provides an environmental perception method for autonomous driving, a medium, and a vehicle.

**BACKGROUND ART**

Currently, in the field of autonomous driving, a vehicle-mounted camera and a LiDAR are highly bound. Therefore, during the process of obtaining environmental perception information, it is required that image data collected by the vehicle-mounted camera, and point cloud data collected by the LiDAR be accurately transmitted to a fusion unit before being recognized to obtain final environmental perception information. However, in some sudden situations, in the event of damage to any one of sensors, such as the vehicle-mounted camera or the LiDAR, the environmental perception information required by the vehicle cannot be obtained, so that safe driving of the vehicle cannot be ensured.

Accordingly, there is a need in the art for a new environmental perception solution for autonomous driving to solve the above problems.

**SUMMARY**

To overcome the above disadvantages, the invention is proposed to solve or at least partially solve the technical problem in the prior art that in the event of damage to any one of sensors, such as a vehicle-mounted camera or a LiDAR, environmental perception information required by a vehicle cannot be obtained. The invention provides an environmental perception method for autonomous driving, a medium, and a vehicle.

In a first aspect, the invention provides an environmental perception method for autonomous driving, the method including: obtaining first target detection information based on image data from a camera; obtaining second target detection information based on point cloud data from a LiDAR; obtaining positioning information based on positioning data from a positioning sensor, where the positioning information includes relative positioning information and global positioning information; fusing the first target detection information, the second target detection information, and the relative positioning information, to obtain first environmental perception information; and fusing the first environmental perception information, the relative positioning information, and the global positioning information, to obtain second environmental perception information.

In a specific implementation, the method further includes obtaining third target detection information based on point cloud data from a millimeter-wave radar; and the fusing the first environmental perception information, the relative positioning information, and the global positioning information, to obtain second environmental perception information includes: fusing the first environmental perception information, the third target detection information, the relative positioning information, and the global positioning information, to obtain the second environmental perception information.

In a specific implementation, the fusing the first target detection information, the second target detection information, and the relative positioning information, to obtain first environmental perception information includes: inputting the first target detection information, the second target detection information, and the relative positioning information into a first perception fusion model, to obtain the first environmental perception information; and the fusing the first environmental perception information, the relative positioning information, and the global positioning information, to obtain second environmental perception information includes: inputting the first environmental perception information, the relative positioning information, and the global positioning information into a second perception fusion model, to obtain the second environmental perception information.

In a specific implementation, the obtaining first target detection information based on image data from a camera includes: inputting the image data from the camera into a first neural network, to obtain the first target detection information, where the first target detection information includes at least one of obstacle information, traffic sign information, ground information, oncoming vehicle light information, and lane line information;

the obtaining second target detection information based on point cloud data from a LiDAR includes: inputting the point cloud data from the LiDAR into a second neural network, to obtain the second target detection information, where the second target detection information includes at least one of obstacle information and drivable area information; and the obtaining positioning information based on positioning data from a positioning sensor includes: inputting positioning data from at least one of satellite navigation, an inertial navigation device, and an odometer into a positioning module, to obtain current pose information of an autonomous vehicle relative to an initial pose, and global pose information of the autonomous vehicle on a global map.

In a specific implementation, the first neural network and the positioning module are configured on a first system-on-chip, and the second neural network is configured on a second system-on-chip that is different from the first system-on-chip; or

the first neural network is configured on a first system-on-chip, and the second neural network and the positioning module are configured on a second system-on-chip that is different from the first system-on-chip.

In a specific implementation, the first perception fusion model and the second perception model are configured on the first system-on-chip.

In a specific implementation, the inputting the first target detection information, the second target detection information, and the relative positioning information into a first perception fusion model, to obtain the first environmental perception information includes: inputting the first target detection information and the relative positioning information into the first perception fusion model, to obtain the first environmental perception information, if it is detected that the second system-on-chip is turned off.

In a specific implementation, the first perception fusion model is configured on the first system-on-chip; and the second perception model is configured on the second system-on-chip.

In a specific implementation, if it is detected that the second system-on-chip is turned off, the inputting the first target detection information, the second target detection information, and the relative positioning information into the first perception fusion model, to obtain the first environmental perception information includes: inputting the first target detection information and the relative positioning information into the first perception fusion model, to obtain the first environmental perception information; and

the method further includes: outputting the first environmental perception information as a final perception result.

In a second aspect, there is configured a system-on-chip. The system-on-chip includes at least one processor and a storage apparatus. The storage apparatus is configured to store a plurality of program codes, where the program codes are adapted to be loaded and executed by the at least one processor to perform the environmental perception method for autonomous driving described in any one of the foregoing aspects.

In a third aspect, there is configured a computer-readable storage medium. The computer-readable storage medium stores a plurality of program codes, where the program codes are adapted to be loaded and executed by at least one processor to perform the environmental perception method for autonomous driving described in any one of the foregoing aspects.

In a fourth aspect, there is provided a vehicle, including the system-on-chip described above.

The one or more technical solutions of the invention described above have at least one or more of the following beneficial effects:

according to the environmental perception method for autonomous driving in the invention, the first target detection information corresponding to the camera, the second target detection information corresponding to the LiDAR, and the positioning information corresponding to the positioning sensor are hierarchically fused, to obtain final environmental perception information. In this way, in the event of damage to any one of the sensors, it can be ensured that the system has independent environmental perception information output capabilities, allowing the system to operate normally, thereby improving the safety performance of the vehicle.

## BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In addition, similar numbers in the figures are used to represent similar components, in which:

FIG. 1 is a schematic flowchart of main steps of an environmental perception method for autonomous driving according to an embodiment of the invention;
FIG. 2 is a schematic flowchart of obtaining a three-dimensional detection result based on three-dimensional point cloud data according to an embodiment of the invention;
FIG. 3 is a schematic flowchart of obtaining a drivable area based on three-dimensional point cloud data according to an embodiment of the invention;
FIG. 4 is a schematic flowchart of complete steps of an environmental perception method for autonomous driving according to an embodiment of the invention;
FIG. 5 is a schematic diagram of a structure of implementing an environmental perception method for autonomous driving using one system-on-chip according to an embodiment of the invention;
FIG. 6 is a schematic diagram of a structure of implementing an environmental perception method for autonomous driving using two system-on-chips according to an embodiment of the invention;
FIG. 7 is a schematic diagram of a structure of implementing an environmental perception method for autonomous driving using two system-on-chips according to an embodiment of the invention; and
FIG. 8 is a schematic block diagram of a main structure of a system-on-chip apparatus according to an embodiment of the invention.

## DETAILED DESCRIPTION OF EMBODIMENTS

Some implementations of the invention are described below with reference to the accompanying drawings. Those skilled in the art should understand that these implementations are merely used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

Currently, in the field of autonomous driving, a vehicle-mounted camera and a LiDAR are highly bound. Therefore, during the process of obtaining environmental perception information, it is required that image data collected by the vehicle-mounted camera, and point cloud data collected by the LiDAR be accurately transmitted to a fusion unit before being recognized to obtain final environmental perception information. However, in some sudden situations, in the event of damage to any one of sensors, such as the vehicle-mounted camera or the LiDAR, the environmental perception information required by the vehicle cannot be obtained, so that safe driving of the vehicle cannot be ensured.

To this end, the invention provides an environmental perception method for autonomous driving, a medium, and a vehicle. First target detection information corresponding to a camera, second target detection information corresponding to a LiDAR, and positioning information corresponding to a positioning sensor are hierarchically fused, so as to obtain final environmental perception information. In this way, in the event of damage to any one of the sensors, it can be ensured that the system has independent environmental perception information output capabilities, allowing the system to operate normally, thereby improving the safety performance of the vehicle.

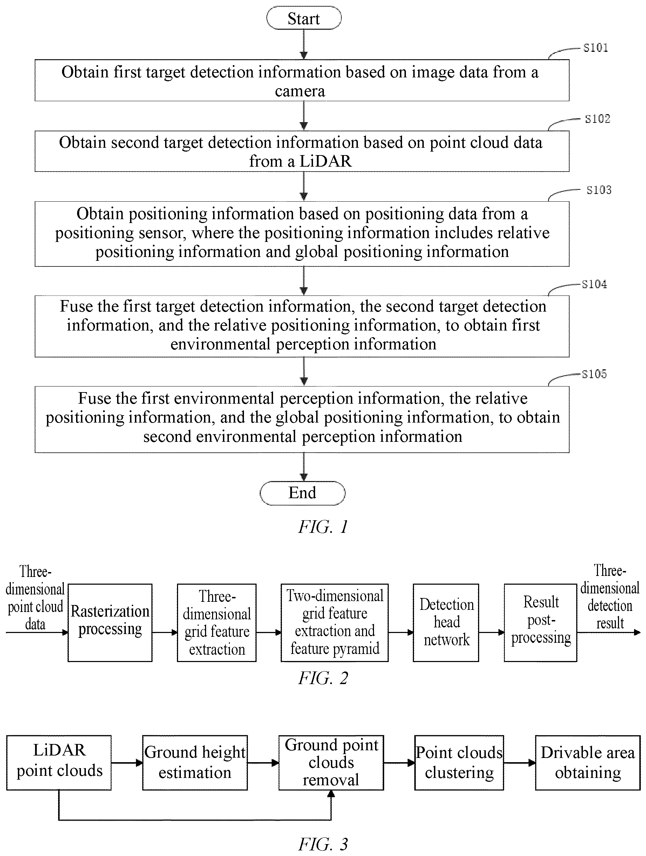

Referring to FIG. 1, which is a schematic flowchart of main steps of an environmental perception method for autonomous driving according to an embodiment of the invention.

As shown in FIG. 1, the environmental perception method for autonomous driving in this embodiment of the invention mainly includes step S 101 to step S105 below.

Step S101: Obtain first target detection information based on image data from a camera.

The camera is used to collect image data of the surroundings of a vehicle. A plurality of cameras may be installed on the vehicle, and may include at least one long-range camera. Specific installation positions of the cameras are not limited, as long as the cameras can implement 360° coverage around the vehicle.

In a specific implementation, the obtaining first target detection information based on image data from a camera includes: inputting the image data from the camera into a first neural network, to obtain the first target detection information, where the first target detection information includes at least one of obstacle information, traffic sign information, ground information, oncoming vehicle light information, and lane line information.

The first neural network is capable of recognizing the image data of the camera, thereby obtaining information such as the obstacle information, the traffic sign information, the ground information, the oncoming vehicle light information, and the lane line information.

The first neural network may be implemented based on any one of a FasterRCNN algorithm, a YOLO algorithm, and a Mobilenet algorithm, but is not limited thereto.

Step S102: Obtain second target detection information based on point cloud data from a LiDAR.

In a specific implementation, the obtaining second target detection information based on point cloud data from a LiDAR includes: inputting the point cloud data from the LiDAR into a second neural network, to obtain the second target detection information, where the second target detection information includes at least one of obstacle information and drivable area information.

Specifically, as shown in FIG. 2, during the process of obtaining obstacle information based on the point cloud data from the LiDAR, first, rasterization preprocessing may be performed on raw three-dimensional point cloud data. Rasterization preprocessing helps to reduce the network's dependence on absolute distances, improves the network's robustness to the distribution of LiDAR point clouds, and also improves the network's generalization ability.

After rasterization preprocessing, paired information of coordinates and features is obtained and is input into a sparse three-dimensional convolutional network. Feature extraction is performed on a three-dimensional shape composed of the point clouds by using the sparse three-dimensional convolutional network, to obtain higher-dimensional features.

After three-dimensional grid feature extraction, three-dimensional point cloud features are obtained. However, in order to increase the receptive field and combine features of more layers of point clouds, a feature map containing two-dimensional features is obtained by using a two-dimensional grid feature extraction network.

After the feature map obtained through two-dimensional feature extraction is obtained, a detection result in the form of bbox is output by using a detection head network. A detection head outputs detection attributes of each pixel on the feature map after two layers of convolution, including classification scores, three-dimensional detection box attributes (coordinates, dimensions, and angles), and orientation classification attributes, etc.

Due to the physical characteristics of the LiDAR, a point cloud detection network often tends to output some false targets, so it is necessary to perform post-processing on the preliminarily obtained detection result to filter out these false targets, to obtain a final three-dimensional detection result, which is the obstacle information.

In addition, specifically, as shown in FIG. 3, during the process of obtaining the drivable area based on the point cloud data from the LiDAR, first, a ground height of a current environment is estimated based on the three-dimensional point cloud data collected by the LiDAR, then, non-ground point clouds in the three-dimensional point cloud data that does not belong to the ground are determined based on the ground height, then, obstacle detection is performed on the non-ground point clouds, to obtain one or more obstacles, and finally, the drivable area is determined based on a position of an obstacle.

By processing the point cloud data from the LiDAR, the obstacle information and the drivable area are obtained, so as to provide foundational support for subsequent information fusion.

Step S103: Obtain positioning information based on positioning data from a positioning sensor, where the positioning information includes relative positioning information and global positioning information.

The positioning sensor includes at least one of satellite navigation, an inertial navigation device, and an odometer.

Specifically, positioning data from at least one of the satellite navigation, the inertial navigation device, and the odometer is input into a positioning module, to obtain current pose information of an autonomous vehicle relative to an initial pose, and global pose information of the autonomous vehicle on a global map, where the current pose information is the relative positioning information, and the global pose information is the global positioning information.

Step S104: Fuse the first target detection information, the second target detection information, and the relative positioning information, to obtain first environmental perception information.

In a specific implementation, the fusing the first target detection information, the second target detection information, and the relative positioning information, to obtain first environmental perception information includes: inputting the first target detection information, the second target detection information, and the relative positioning information into a first perception fusion model, to obtain the first environmental perception information.

Specifically, the first target detection information includes a two-dimensional bounding box for a detected target, and a first confidence value, and the second target detection information includes a candidate three-dimensional bounding box for the detected target, and a second confidence value. Specifically, during the process of fusing the first target detection information, the second target detection information, and the relative positioning information, first, a manual feature is constructed by using the first target detection information, the second target detection information, and the relative positioning information, and then, the manual feature is input into a late-fusion network to generate a new confidence value for the candidate three-dimensional bounding box, to obtain the first environmental perception information.

The constructing a manual feature by using the first target detection information, the second target detection information, and the relative positioning information includes: adding the first confidence value corresponding to the two-dimensional bounding box, and the second confidence value corresponding to the three-dimensional bounding box to the manual feature; projecting a three-dimensional bounding box corresponding to the LiDAR onto a camera image, to obtain a two-dimensional bounding box corresponding to the LiDAR; calculating a generalized intersection over union (GIoU) based on the two-dimensional bounding box corresponding to the LiDAR, and a two-dimensional bounding box corresponding to the camera, and adding the calculated GIoU to the manual feature; estimating a depth of a center point of a vehicle target based on the second target detection information, and adding the depth to the manual feature; and obtaining a distance from the three-dimensional bounding box to a center of the camera based on the relative positioning information, and adding the distance to the manual feature.

Specifically, for any two-dimensional detection boxes A1 and A2, first, a smallest bounding box A3 thereof is found, then, a ratio of A3/(A1 U A2) to an area of A3 is calculated, and a ratio of an intersection over union (IoU) of the two-dimensional detection boxes A1 and A2 to A3 is used as a GIoU, i.e.,

$$\text{GIoU} = \text{IoU} - \frac{|A3/(A1 \cup A2)|}{|A3|}$$

a calculation formula for the depth $Z_i$ of the center point of the vehicle target is:

$$Z_i = \frac{fb}{x_1}$$

where $f$ is a focal length of the camera, b is a baseline length, and $x_1$ is a distance from a center point of the detection box to a center point of the image.

The late-fusion network is composed of one maximum pooling layer, and four one-dimensional convolutional networks, which are respectively Conv2D(4, 16, (1,1), 1), Conv2D(16, 32, (1,1), 1), Conv2D(32, 32, (1, 1), 1) and Conv2D(32, 1, (1,1), 1), where Conv2D(cin, cout, k, s) has the meaning of: cin and cout are numbers of input and output channels, respectively, k is a size of a convolution kernel, and s is a stride.

The first perception fusion module may fuse the first target detection information, the second target detection information, and the relative positioning information, to obtain the first environmental perception information, thereby providing support for safe driving of the vehicle. The first perception fusion module may alternatively be implemented through other algorithms, and details are not described herein again.

Step S105: Fuse the first environmental perception information, the relative positioning information, and the global positioning information, to obtain second environmental perception information.

In a specific implementation, the fusing the first environmental perception information, the relative positioning information, and the global positioning information, to obtain second environmental perception information includes: inputting the first environmental perception information, the relative positioning information, and the global positioning information into a second perception fusion model, to obtain the second environmental perception information.

Specifically, an operation trajectory of a target is estimated based on the first environmental perception information, the relative positioning information, and the global positioning information, and information such as a specific position, speed magnitude, and direction of the target in the global map at a next moment is accurately estimated.

In a specific implementation, the method further includes obtaining third target detection information based on point cloud data from a millimeter-wave radar; and the fusing the first environmental perception information, the relative positioning information, and the global positioning information, to obtain second environmental perception information includes: fusing the first environmental perception information, the third target detection information, the relative positioning information, and the global positioning information, to obtain the second environmental perception information.

During the process of fusing the first environmental perception information, the third target detection information, the relative positioning information, and the global positioning information, first, detection boxes for the first environmental perception information and the third target detection information are obtained, where the detection box is a smallest bounding box for the target.

Then, positions of targets in the first environmental perception information and the third target detection information, and trajectories and speeds of the targets are determined based on the relative positioning information and the global positioning information, and an IoU of detection boxes corresponding to two targets is calculated based on the positions.

Finally, it is determined whether the IoU, a trajectory similarity, and a speed similarity meet a preset condition, specifically, if the IoU is greater than an IoU threshold, the trajectory similarity is greater than a trajectory threshold, and the speed similarity is greater than a speed similarity threshold, it indicates that matching of the two targets is successful. In this case, information such as the position, speed, and heading angle of the target contained in the first environmental perception information is output as the second perception information.

If the preset condition is not met, it indicates that matching of the two targets is unsuccessful. Specifically, when an unsuccessfully matched target is a target in the first environmental perception information, information such as the position, speed, and heading angle of the target obtained from the first environmental perception information is output as specific information of the target. Specifically, when an unsuccessfully matched target is a target in the third target detection information, information such as the position, speed, and heading angle of the target obtained from the third target detection information is output as specific information of the target.

The second perception fusion module may further fuse the relative positioning information, the global positioning information, the first environmental perception information, and the third target detection information, to obtain more accurate environmental perception information. The second perception fusion module may alternatively be implemented through other algorithms, and details are not described herein again.

Based on the above step S101 to step S105, the first target detection information corresponding to the camera, the second target detection information corresponding to the LiDAR, and the positioning information corresponding to the positioning sensor are hierarchically fused, so as to obtain final environmental perception information. In this way, in the event of damage to any one of the sensors, it can be ensured that the system has independent environmental perception information output capabilities, allowing the system to operate normally, thereby improving the safety performance of the vehicle.

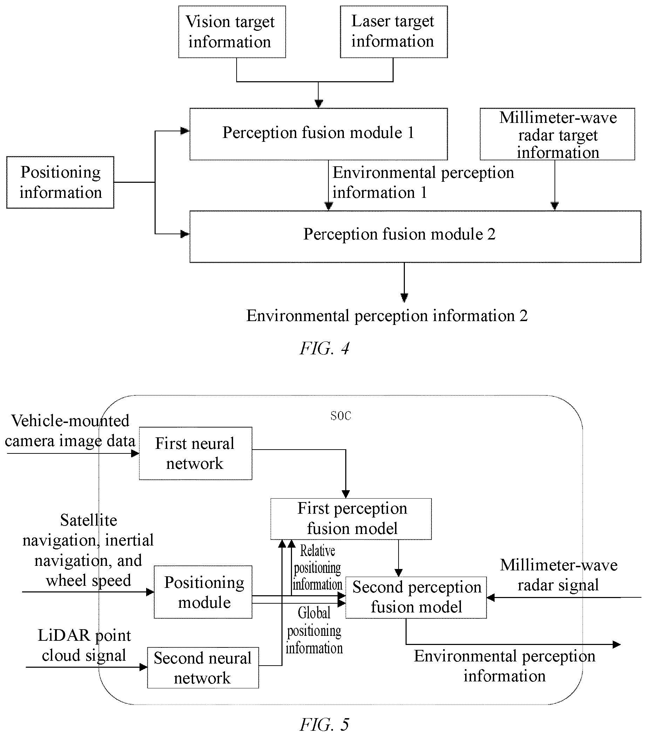

In order to obtain more accurate environmental perception information, as shown in FIG. 4, the third target detection information obtained based on the point cloud data collected by the millimeter-wave radar may also be added to the process of environmental information fusion. Specifically, the third target detection information, the first environmental perception information, the relative positioning information, and the global positioning information are input into the second perception fusion module for fusion, to obtain second environmental perception information. Since target detection information corresponding to the point clouds from the millimeter-wave radar is added to the fusion process, the second environmental perception information obtained through fusion is more accurate.

Specifically, as shown in FIG. 5, the first neural network, the positioning module, the second neural network, the first perception fusion model, and the second perception fusion model may be configured on a system-on-chip (SOC).

In a specific implementation, the first neural network and the positioning module are configured on a first system-on-chip, and the second neural network is configured on a second system-on-chip that is different from the first system-on-chip; or the first neural network is configured on a first system-on-chip, and the second neural network and the positioning module are configured on a second system-on-chip that is different from the first system-on-chip.

In a specific implementation, the first perception fusion model and the second perception model are configured on the first system-on-chip.

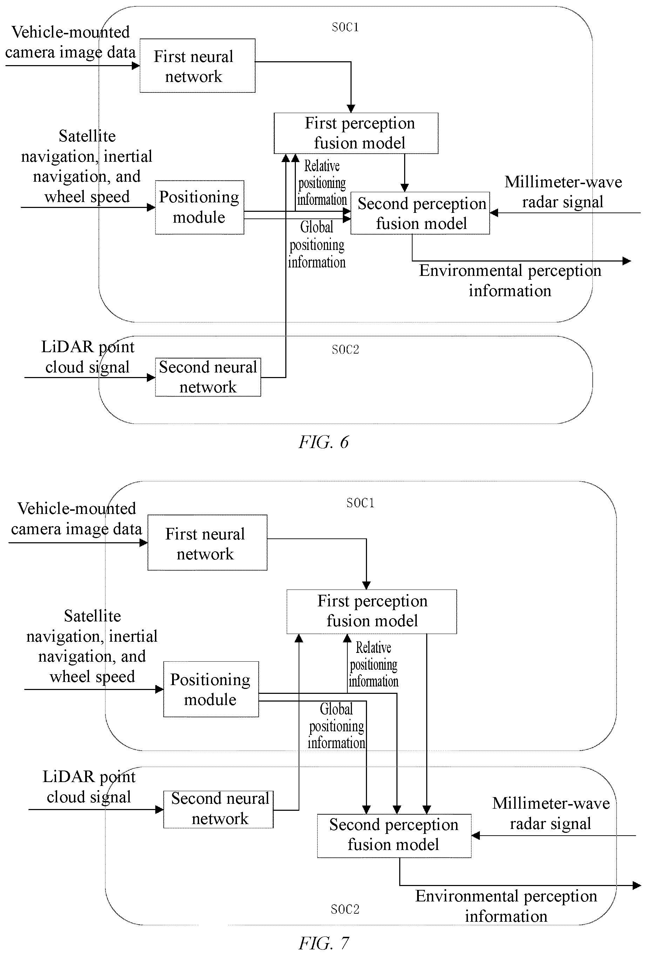

Specifically, as shown in FIG. 6, the first neural network and the positioning module are configured on a first system-on-chip (SOC1), and the second neural network is configured on a second system-on-chip (SOC2) that is different from SOC1.

In addition, the first neural network may be on the first system-on-chip (SOC1), and the second neural network and the positioning module are configured on the second system-on-chip (SOC2).

Meanwhile, the first perception fusion model and the second perception model may also be configured on SOC1. In this way, when SOC2 is turned off, it is ensured that the vehicle can obtain basic environmental perception information, allowing the vehicle to maintain basic driving performance. When SOC2 is operational, it is ensured that the vehicle can obtain more accurate environmental perception information, thereby ensuring safe and stable driving of the vehicle.

In a specific implementation, the inputting the first target detection information, the second target detection information, and the relative positioning information into a first perception fusion model, to obtain the first environmental perception information includes: inputting the first target detection information and the relative positioning information into the first perception fusion model, to obtain the first environmental perception information, if it is detected that the second system-on-chip is turned off.

When SOC2 is turned off, the second neural network cannot output the second target detection information. Therefore, in this case, the second target detection information may be used as invalid information and does not participate in data fusion. The first target detection information and the relative positioning information are directly fused in the first perception fusion module. In this way, it is also possible to ensure that the system outputs the first environmental perception information and the second environmental perception information, thereby ensuring safe driving of the vehicle.

In a specific implementation, the first perception fusion model is configured on the first system-on-chip; and the second perception model is configured on the second system-on-chip.

As shown in FIG. 6, the first perception fusion module and the second perception fusion module may be implemented in one SOC. In addition, as shown in FIG. 7, the first perception fusion module and the second perception fusion module may alternatively be implemented on different SOCs. The advantage of implementing the first perception fusion module and the second perception fusion module on different SOCs is that, when the computing power of a single SOC is limited, the algorithms can be distributed across multiple SOCs with AI computing power, ensuring sufficient computational resources. Meanwhile, based on different application requirements, it may be convenient to turn off some computational resources to reduce power consumption and improve vehicle range. As shown in FIG. 7, when high-level autonomous driving functions of the vehicle are not activated, the second system-on-chip (SOC2) may be turned off, and only vehicle-mounted camera and positioning information are used as inputs to implement the relevant low-level autonomous driving functions.

In a specific implementation, if it is detected that the second system-on-chip is turned off,

the inputting the first target detection information, the second target detection information, and the relative positioning information into a first perception fusion model, to obtain the first environmental perception information includes: inputting the first target detection information and the relative positioning information into the first perception fusion model, to obtain the first environmental perception information; and the method further includes: outputting the first environmental perception information as a final perception result.

When high-level autonomous driving functions of the vehicle are not activated, the second system-on-chip (SOC2) may be turned off. In this case, the second target detection information is used as invalid information and does not participate in data fusion, and the first target detection information and the relative positioning information are directly fused in the first perception fusion model. Meanwhile, after the second system-on-chip (SOC2) is turned off, the second perception fusion module cannot operate normally. Therefore, information output by the second perception fusion model is invalid information. In this case, the first environmental perception information may be output as the final perception result. In this way, resources are saved while guaranteeing the basic driving functions of the vehicle.

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by at least one processor, the steps in the above method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

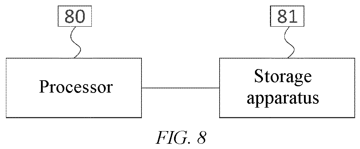

Further, the invention further provides a system-on-chip. In an embodiment of an electronic device according to the invention, as shown in FIG. 8, the system-on-chip includes a processor 80 and a storage apparatus 81. The storage apparatus may be configured to store a program for performing the environmental perception method for autonomous driving in the above method embodiment. The processor may be configured to execute a program in the storage apparatus. The program includes but is not limited to the program for performing the environmental perception method for autonomous driving in the above method embodiment. For ease of description, only parts related to the embodiments of the invention are shown. For specific technical details that are not disclosed, refer to the method part of the embodiments of the invention.

Further, the invention further provides a computer-readable storage medium. In an embodiment of the computer-readable storage medium according to the invention, the computer-readable storage medium may be configured to store a program for performing the environmental perception method for autonomous driving in the above method embodiment, and the program may be loaded and executed by at least one processor to implement the environmental perception method for autonomous driving described above. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a vehicle, including the system-on-chip described above.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

**Claims**

1. An environmental perception method for autonomous driving, comprising:

   obtaining first target detection information based on image data from a camera;
   obtaining second target detection information based on point cloud data from a LiDAR;
   obtaining positioning information based on positioning data from a positioning sensor, wherein the positioning information comprises relative positioning information and global positioning information;
   fusing the first target detection information, the second target detection information, and the relative positioning information, to obtain first environmental perception information; and
   fusing the first environmental perception information, the relative positioning information, and the global positioning information, to obtain second environmental perception information.

2. The environmental perception method for autonomous driving according to claim 1, wherein the method further comprises obtaining third target detection information based on point cloud data from a millimeter-wave radar; and
   the fusing the first environmental perception information, the relative positioning information, and the global positioning information, to obtain second environmental perception information comprises: fusing the first environmental perception information, the third target detection information, the relative positioning information, and the global positioning information, to obtain the second environmental perception information.

3. The environmental perception method for autonomous driving according to claim 1 or 2, wherein the fusing the first target detection information, the second target detection information, and the relative positioning information, to obtain first environmental perception information comprises: inputting the first target detection information, the second target detection information, and the relative positioning information into a first perception fusion model, to obtain the first environmental perception information; and

the fusing the first environmental perception information, the relative positioning information, and the global positioning information, to obtain second environmental perception information comprises: inputting the first environmental perception information, the relative positioning information, and the global positioning information into a second perception fusion model, to obtain the second environmental perception information.

4. The environmental perception method for autonomous driving according to claim 3, wherein

the obtaining first target detection information based on image data from a camera comprises: inputting the image data from the camera into a first neural network, to obtain the first target detection information, wherein the first target detection information comprises at least one of obstacle information, traffic sign information, ground information, oncoming vehicle light information, and lane line information;

the obtaining second target detection information based on point cloud data from a LiDAR comprises: inputting the point cloud data from the LiDAR into a second neural network, to obtain the second target detection information, wherein the second target detection information comprises at least one of obstacle information and drivable area information; and

the obtaining positioning information based on positioning data from a positioning sensor comprises: inputting positioning data from at least one of satellite navigation, an inertial navigation device, and an odometer into a positioning module, to obtain current pose information of an autonomous vehicle relative to an initial pose, and global pose information of the autonomous vehicle on a global map.

5. The environmental perception method for autonomous driving according to claim 4, wherein the first neural network and the positioning module are configured on a first system-on-chip, and the second neural network is configured on a second system-on-chip that is different from the first system-on-chip; or the first neural network is configured on a first system-on-chip, and the second neural network and the positioning module are configured on a second system-on-chip that is different from the first system-on-chip.

6. The environmental perception method for autonomous driving according to claim 5, wherein the first perception fusion model and the second perception model are configured on the first system-on-chip.

7. The environmental perception method for autonomous driving according to claim 6, wherein the inputting the first target detection information, the second target detection information, and the relative positioning information into a first perception fusion model, to obtain the first environmental perception information comprises:
   inputting the first target detection information and the relative positioning information into the first perception fusion model, to obtain the first environmental perception information, if it is detected that the second system-on-chip is turned off.

8. The environmental perception method for autonomous driving according to claim 5, wherein the first perception fusion model is configured on the first system-on-chip; and
   the second perception model is configured on the second system-on-chip.

9. The environmental perception method for autonomous driving according to claim 8, wherein if it is detected that the second system-on-chip is turned off,

the inputting the first target detection information, the second target detection information, and the relative positioning information into a first perception fusion model, to obtain the first environmental perception information comprises: inputting the first target detection information and the relative positioning information into the first perception fusion model, to obtain the first environmental perception information; and

the method further comprises: outputting the first environmental perception information as a final perception result.

10. A system-on-chip, comprising at least one processor and a storage apparatus, wherein the storage apparatus is configured to store a plurality of program codes, wherein the program codes are adapted to be loaded and executed by the at least one processor to perform the environmental perception method for autonomous driving according to any one of claims 1 to 9.

11. A computer-readable storage medium storing a plurality of program codes, wherein the program codes are adapted to be loaded and executed by at least one processor to perform the environmental perception method for autonomous driving according to any one of claims 1 to 9.

12. A vehicle, comprising the system-on-chip according to claim 10.

Start

Obtain first target detection information based on image data from a camera ⌐ S101

Obtain second target detection information based on point cloud data from a LiDAR ⌐ S102

Obtain positioning information based on positioning data from a positioning sensor, where the positioning information includes relative positioning information and global positioning information ⌐ S103

Fuse the first target detection information, the second target detection information, and the relative positioning information, to obtain first environmental perception information ⌐ S104

Fuse the first environmental perception information, the relative positioning information, and the global positioning information, to obtain second environmental perception information ⌐ S105

End

*FIG. 1*

Three-dimensional point cloud data → Rasterization processing → Three-dimensional grid feature extraction → Two-dimensional grid feature extraction and feature pyramid → Detection head network → Result post-processing → Three-dimensional detection result

*FIG. 2*

LiDAR point clouds → Ground height estimation → Ground point clouds removal → Point clouds clustering → Drivable area obtaining

*FIG. 3*

| Vision target information | Laser target information |
|---|---|

Perception fusion module 1

Positioning information

Millimeter-wave radar target information

Environmental perception information 1

Perception fusion module 2

Environmental perception information 2

*FIG. 4*

SOC

Vehicle-mounted camera image data

First neural network

First perception fusion model

Satellite navigation, inertial navigation, and wheel speed

Positioning module

Relative positioning information

Second perception fusion model

Millimeter-wave radar signal

LiDAR point cloud signal

Second neural network

Global positioning information

Environmental perception information

*FIG. 5*

SOC1

Vehicle-mounted camera image data → First neural network

First perception fusion model

Satellite navigation, inertial navigation, and wheel speed → Positioning module

Relative positioning information

Global positioning information

Second perception fusion model ← Millimeter-wave radar signal

Environmental perception information

LiDAR point cloud signal → Second neural network

SOC2

*FIG. 6*

SOC1

Vehicle-mounted camera image data → First neural network

First perception fusion model

Satellite navigation, inertial navigation, and wheel speed → Positioning module

Relative positioning information

Global positioning information

LiDAR point cloud signal → Second neural network

Second perception fusion model ← Millimeter-wave radar signal

Environmental perception information

SOC2

*FIG. 7*

80

81

| Processor | | Storage apparatus |

*FIG. 8*

## INTERNATIONAL SEARCH REPORT

International application No.

**PCT/CN2023/103659**

### A. CLASSIFICATION OF SUBJECT MATTER

G06V20/56(2022.01)i; G06V10/80(2022.01)i; G06V10/82(2022.01)i; G06N3/04(2023.01)i

According to International Patent Classification (IPC) or to both national classification and IPC

### B. FIELDS SEARCHED

Minimum documentation searched (classification system followed by classification symbols)

IPC: G06V G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 相机, 雷达, 点云, 定位, 相对, 全局, 融合, 环境, 感知, 毫米波, 位姿, 芯片, camera, radar, point cloud, positioning, relative, global, fusion, environmental awareness, context awareness, millimeter wave, posture, chip

### C. DOCUMENTS CONSIDERED TO BE RELEVANT

| Category* | Citation of document, with indication, where appropriate, of the relevant passages | Relevant to claim No. |
|---|---|---|
| PX | CN 115205803 A (ANHUI NIO INTELLIGENT DRIVING TECHNOLOGY CO., LTD.) 18 October 2022 (2022-10-18) claims 1-10, and description, paragraphs [0004]-[0020] | 1-12 |
| PX | CN 115273027 A (ANHUI NIO INTELLIGENT DRIVING TECHNOLOGY CO., LTD.) 01 November 2022 (2022-11-01) description, paragraphs [0027]-[0089] | 1-12 |
| A | CN 113002396 A (QINGDAO HUITUO INTELLIGENT MACHINE CO., LTD.) 22 June 2021 (2021-06-22) description, paragraphs [0048]-[0050] | 1-12 |
| A | CN 109556615 A (JILIN UNIVERSITY) 02 April 2019 (2019-04-02) entire document | 1-12 |
| A | CN 112740268 A (HUAWEI TECHNOLOGIES CO., LTD.) 30 April 2021 (2021-04-30) entire document | 1-12 |

☑ Further documents are listed in the continuation of Box C.    ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 October 2023** | **18 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/103659**

**C.    DOCUMENTS CONSIDERED TO BE RELEVANT**

| Category* | Citation of document, with indication, where appropriate, of the relevant passages | Relevant to claim No. |
|---|---|---|
| A | CN 110032965 A (NANJING UNIVERSITY OF SCIENCE AND TECHNOLOGY) 19 July 2019 (2019-07-19) <br>     entire document | 1-12 |
| A | US 2017075355 A1 (FORD GLOBAL TECHNOLOGIES, L.L.C.) 16 March 2017 (2017-03-16) <br>     entire document | 1-12 |

Form PCT/ISA/210 (second sheet) (July 2022)

**INTERNATIONAL SEARCH REPORT**
Information on patent family members

International application No.

**PCT/CN2023/103659**

| Patent document cited in search report | | | Publication date (day/month/year) | Patent family member(s) | | | Publication date (day/month/year) |
|---|---|---|---|---|---|---|---|
| CN | 115205803 | A | 18 October 2022 | None | | | |
| CN | 115273027 | A | 01 November 2022 | None | | | |
| CN | 113002396 | A | 22 June 2021 | None | | | |
| CN | 109556615 | A | 02 April 2019 | None | | | |
| CN | 112740268 | A | 30 April 2021 | WO | 2022104774 | A1 | 27 May 2022 |
| CN | 110032965 | A | 19 July 2019 | None | | | |
| US | 2017075355 | A1 | 16 March 2017 | US | 2022026919 | A1 | 27 January 2022 |
| | | | | DE | 102016117123 | A1 | 16 March 2017 |
| | | | | GB | 2543930 | A | 03 May 2017 |
| | | | | US | 2018341273 | A1 | 29 November 2018 |
| | | | | MX | 2016011943 | A | 15 March 2017 |
| | | | | RU | 2016136822 | A | 19 March 2018 |
| | | | | CN | 106546977 | A | 29 March 2017 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210834143